# EUROPEAN PATENT SPECIFICATION

(11) **EP 3 972 040 B1**
(45) Date of publication and mention of the grant of the patent: **27.11.2024**
(21) Application number: 21197264.1
(22) Date of filing: 16.09.2021
(51) Int. Cl.: H01M 50/204, H01M 50/358, H01M 50/367, H01M 50/383, H01M 10/615, H01M 10/6568, H01M 50/213, H01M 50/249, H01M 50/262

(54) **BATTERY PACK**
BATTERIEPACK
BLOC-BATTERIE

(30) Priority: 17.09.2020 KR 20200119846
(43) Date of publication of application: 23.03.2022
(73) Proprietor: SK On Co., Ltd., Seoul 03161 (KR)
(72) Inventor: LEE, Jun Young, 34124 Daejeon (KR); KIM, Hong Sik, 34124 Daejeon (KR); PARK, Chan Saem, 34124 Daejeon (KR); LEE, Jang Kuyn, 34124 Daejeon (KR)
(74) Representative: Stolmár & Partner Patentanwälte PartG mbB

(56) References cited:
- WO-A1-2020/180115
- KR-A- 20160 112 768

## Description

### CROSS-REFERENCE TO RELATED APPLICATION(S)

This application claims benefit of priority to Korean Patent Application No. 10-2020-0119846 filed on September 17, 2020 in the Korean Intellectual Property Office.

### BACKGROUND

### 1. FIELD

Example embodiments of the present disclosure relate to a battery pack including a plurality of battery cells and a venting member for discharging gas generated in a pack housing.

### 2. DESCRIPTION OF RELATED ART

Differently from a primary battery, a secondary battery may be charged and discharged such that a secondary battery may be applied to various fields such as a digital camera, a mobile phone, a laptop, a hybrid vehicle, and an electric vehicle. Examples of a secondary battery may include a nickel-cadmium battery, a nickel-metal hydride battery, a nickel-hydrogen battery, and a lithium secondary battery.

Among such secondary batteries, many studies regarding a lithium secondary battery having high energy density and discharge voltage have been conducted. Recently, a lithium secondary battery has been manufactured and used as a pouched type battery cell having flexibility, or manufactured as a prismatic or cylindrical can type battery cell having rigidity.

Also, a secondary battery has been widely used in small-sized devices such as a portable electronic device, and also in medium-sized and large-sized devices such as vehicles and energy storage system. When a secondary battery is used in such a medium-sized or large-sized device, a large number of secondary batteries may be electrically connected to each other to increase capacity and output of the entire battery. To this end, in a medium-sized and large-sized device, a plurality of battery modules in which a plurality of battery cells are modularized may be installed in a battery pack.

Various standards may be required for such a battery pack, and a representative standard may be safety. Particularly, the safety of a battery pack provided in a vehicle may be important because the safety of the battery pack may be directly related to passenger safety.

One of the important issues related to the safety of the battery pack may be to prevent ignition in the battery pack, and even when ignition or a fire (flame) occurs, it may be necessary to sufficiently delay exposure of the flame generated in the battery pack. For example, when ignition starts in the battery pack, it may be necessary to delay the spread of the flame externally of the battery pack by allowing a predetermined time (e.g., 5 minutes or more) to elapse until the flame is observed outside the battery pack.

A battery pack may include a plurality of battery cells including a lithium secondary battery, and the like. When various events occurs, such as, when the lifespan of the battery cell reaches the end of life, when the battery cell swells, when the battery cell is overcharged, when the battery cell is exposed to heat, when a sharp object such as a nail penetrates an casing of the battery cell, or when an external impact is applied to the battery cell, an electrolyte gas may leak out of the battery cell. In particular, in the case of a high-capacity pouch-type lithium secondary battery, when the above-mentioned issues occur, a large amount of electrolyte gas may be exposed through a sealing portion of a pouch (casing), which may be problematic. To discharge the electrolyte gas generated within the internal space of the battery pack externally of the battery pack, a venting hole (a venting member, a gas exhaust port, a gas passage port) may be installed in the wall surface of a pack housing. WO 2020/180115 A1 describes a battery module comprising a cell stack, a module case, a pair of module covers and a ventilation unit arranged to pass through the module cover.

The venting hole may also be used to discharge the gas generated in the battery pack externally, such that the venting hole may be used to delay the spread of flame.

Since the venting hole has an open structure, the gas in the pack housing may be discharged through the venting hole, and the venting hole may also work as a path through which air from the outside of the pack housing may flow into the pack housing.

Therefore, when a fire (flame) occurs in the battery pack, the gas generated in the battery pack may be discharged through the open venting hole. However, while the gas is discharged, a turbulent flow or vortex may occur such that air outside the battery pack may flow into the internal space of the battery pack through the venting hole. When external air flows into the battery pack, an explosion may occur in the battery pack due to oxygen contained in the external air.

To prevent the inflow of external air, a size of the venting hole may be reduced to prevent the possibility of inflow of external air, but in this case, the air in the battery pack may not be smoothly discharged externally, such that the pressure in the battery pack may increase, which may cause deformation of or damage to the battery pack. In this case, the flame in the battery pack may be directly exposed externally of the battery pack through the deformed or damaged part of the battery pack, which may lead to a large fire outside the battery pack.

### SUMMARY

An example embodiment of the present disclosure is to provide a battery pack which may, even when a flame occurs in the battery pack, sufficiently delay the spread of flames externally.

An example embodiment of the present disclosure is to provide a battery pack which may prevent external air from flowing into the battery pack through a venting member and may also reduce the increase of pressure in the battery pack.

An example embodiment of the present disclosure is to provide a battery pack which may, even when a large amount of electrolyte gas in the battery pack is discharged externally, reduce the possibility of ignition and flame caused by the discharged electrolyte gas. The invention is defined in the appended claims.

The present invention provides a battery pack including a pack housing having an internal space in which a plurality of battery modules are installed or a plurality of battery cells are installed directly without being modulized; and a venting member installed in the pack housing and configured to discharge gas generated in the internal space externally, wherein the venting member is configured such that a cross-sectional area of an outlet side of the venting member connected to an external space of the pack housing is smaller than a cross-sectional area of an inlet side of the venting member connected to the internal space.

The battery cell may include a pouch type secondary battery in which an electrode assembly and an electrolyte are accommodated in a pouch-type casing and at least a portion of the casing is sealed. The venting member is configured to include a first region connected to the inlet side and a second region connected to the outlet side. The first region may have a constant cross-sectional area along its entire extent, and a cross-sectional area of the second region may be reduced in a direction from the first region to the outlet side.

The first region and the second region may have a circular cross-sectional shape. The first region may have a hollow cylindrical shape, and the second region may have a hollow truncated conical shape.

A length of the second region may be configured to be 0.2-0.8 times a distance from the inlet side to the outlet side. A cross-sectional area of the outlet side is configured to be 0.2-0.8 times a cross-sectional area of the inlet side, preferably 0.4-0.7 times a cross-sectional area of the inlet side.

The first region may have a shape in which the cross-sectional area thereof decreases at a first inclination angle in a direction from the inlet side to the outlet side, and the second region may have a shape in which the cross-sectional area thereof decreases at a second inclination angle greater than the first inclination angle in the direction from the inlet side to the outlet side.

The inlet side of the venting member may be disposed on the same surface as an internal surface of an external wall of the pack housing.

The venting member may be formed in a shape of a hole in an external wall of the pack housing. Alternatively, the venting member may have a shape in which at least a portion of the venting member protrudes to an external side of an external wall of the pack housing. At least a portion of the venting member may include a venting guide member attached to the external wall of the pack housing.

At least one or more additional venting members identical to the venting member may be provided, and wherein the plurality of the venting members are spaced apart from each other on an external wall on one side of the pack housing. The plurality of venting members may be disposed on the external wall on the one side of the pack housing and on another external wall different from the external wall on the one side of the pack housing.

The venting member may maintain an open state without being closed such that air flows through the venting member.

The present invention further provides a battery pack comprising a pack housing including a partition member creating a plurality of internal spaces configured to receive at least one battery module; and at least one venting member for discharging gas generated in the internal space externally of the pack housing, wherein the venting member has an inlet opening having a first cross-sectional area and an outlet opening having a second cross-sectional area that is smaller than the first cross-sectional area.

### BRIEF DESCRIPTION OF DRAWINGS

The above and other aspects, features, and advantages of the present disclosure will be more clearly understood from the following detailed description, taken in conjunction with the accompanying drawings, in which:
FIGS. 1A and 1B are a perspective diagram illustrating a battery pack according to an example embodiment of the present disclosure;
FIG.1C is a perspective view of a battery cell according to an example embodiment;
FIGS. 2A to 2D are diagrams illustrating examples of a venting member provided in a battery pack according to an example embodiment of the present disclosure, where FIG. 2A is a cross-sectional diagram illustrating a venting member taken in a length direction, FIG. 2B is a diagram illustrating the venting member in FIG. 2A, viewed from "A," and FIGS. 2C and 2D are a diagram illustrating a modified example of the venting member in FIG. 2A;
FIGS. 3A and 3B are cross-sectional diagrams illustrating a modified example of a venting member provided in a battery pack according to an example embodiment of the present disclosure;
FIG. 4 is a cross-sectional diagram illustrating another modified example of a venting member provided in a battery pack according to an example embodiment of the present disclosure;
FIG. 5 is a perspective diagram illustrating a battery pack according to the prior art;
FIGS. 6A and 6B are analysis diagrams illustrating a flow rate of fluid when ignition occurs in the battery pack in the prior art illustrated in FIG. 5, where FIG. 6A illustrates a velocity of fluid when a diameter of the venting member is 50mm, and FIG. 6B illustrates a velocity of fluid when a diameter of the venting member is 40mm;
FIGS. 7A and 7B are analysis diagrams illustrating a velocity of fluid in a venting member in relation to the battery pack in the prior art illustrated in FIG. 6A, where FIG. 7A illustrates a velocity of fluid with respect to portion V1 in FIG. 6A, and FIG. 7B illustrates a velocity of fluid with respect to portion V2 in FIG. 6A;
FIG. 8A is an analysis diagram illustrating a velocity and a direction of fluid illustrated in FIG. 7A, and FIG. 8B is an analysis diagram illustrating a velocity and a direction of fluid illustrated in FIG. 7B;

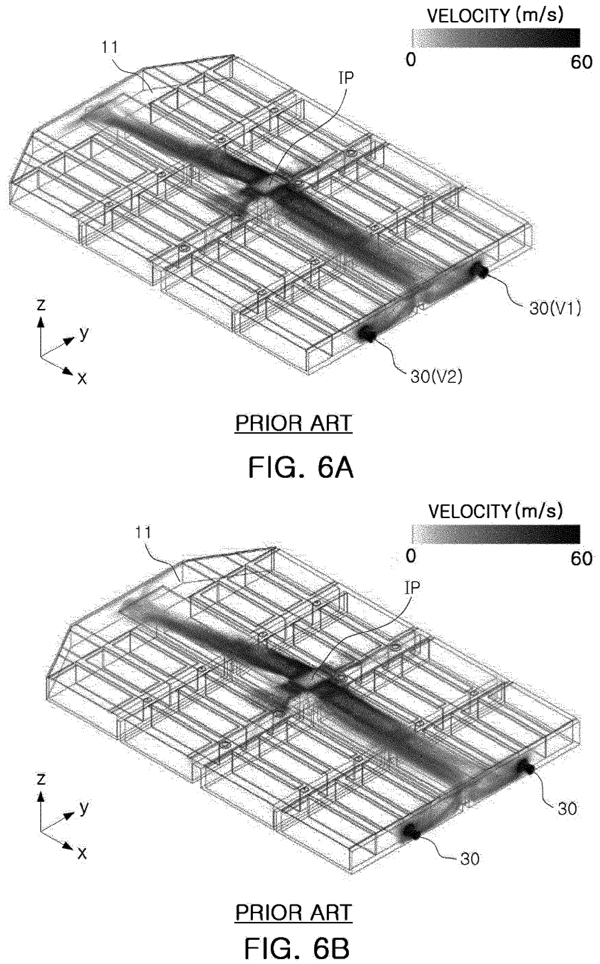

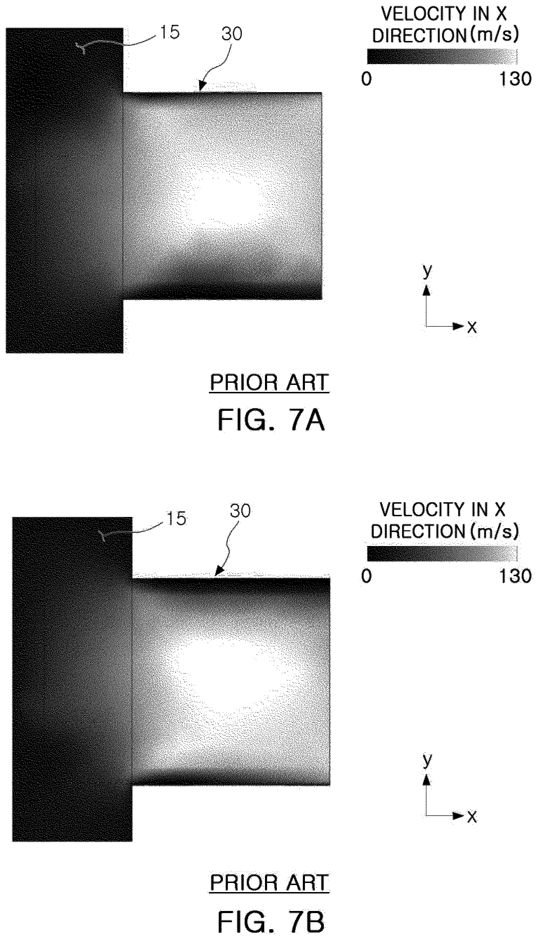

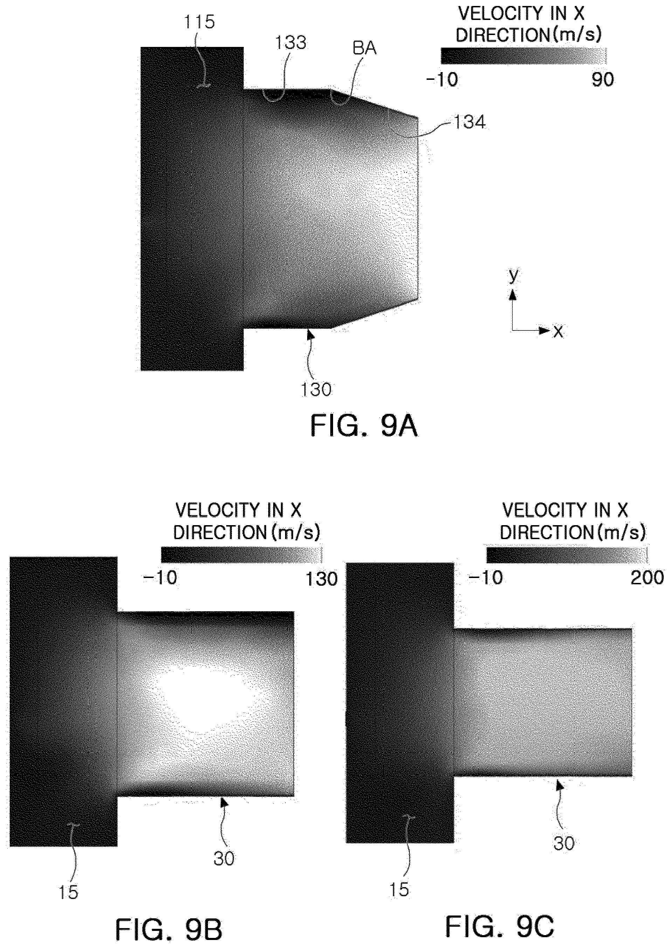

FIGS. 9A to 9C are analysis diagrams illustrating comparison of a velocity of fluid in a venting member between a battery pack of an example embodiment and a battery pack in the prior art, where FIG. 9A illustrates a velocity of fluid in a venting member according to an example embodiment of the present disclosure, FIG. 9B relates to the battery pack in the prior art illustrated in FIG. 6A, illustrating a velocity (the same as in FIG. 7B) of fluid in a venting member having a diameter of 50mm and a length of 48mm, and FIG. 9C relates to the battery pack in the prior art illustrated in FIG. 6B, illustrating a velocity of fluid in a venting member having a diameter of 40mm and a length of 48mm;
FIGS. 10A to 10C are analysis diagrams illustrating comparison of a velocity and a direction of fluid between a battery pack of an example embodiment and a battery pack in the prior art illustrated in FIGS. 9A to 9C, where FIGS. 10A, 10B (the same as in FIG. 8B), and 10C illustrate velocities and directions of fluid with respect to FIGS. 9A, 9B, and 9C, respectively;
FIGS. 11A to 11C are analysis diagrams illustrating distribution of internal pressure of the battery pack of an example embodiment and the battery pack in the prior art illustrated in FIGS. 9A to 9C, where FIGS. 11A, 11B, and 11C illustrate internal pressure of the battery pack with respect to FIGS. 9A, 9B, and 9C, respectively;
FIG. 12 is a diagram illustrating an overall structure used in analysis of the state in which electrolyte gas is discharged from the battery pack with respect to an example embodiment and the prior art;
FIG. 13 is an analysis diagram illustrating distribution of a velocity of electrolyte gas and distribution of mixture variance of electrolyte gas discharged from a venting member with respect to an example embodiment and the prior art;
FIG. 14 is an analysis diagram illustrating distribution of H₂O mass fraction and distribution of temperature of the electrolyte gas discharged from a venting member with respect to an example embodiment and the prior art; and
FIGS. 15A to 15C are diagrams illustrating a comparison between a battery pack of an example embodiment and the prior art with respect to the analysis structure in FIG. 12, where FIG. 15A illustrates a length of flame of the electrolyte gas discharged from a venting member and an average pressure in the battery packs, FIG. 15B is a graph illustrating comparison of an average pressure in the battery packs, and FIG. 15C is a graph illustrating a comparison of an average pressure in the battery packs.

### DETAILED DESCRIPTION

It is to be understood that the terms or words used in this description and the following claims must not be construed to have meanings which are general or may be found in a dictionary. Therefore, considering the notion that an inventor may most properly define the concepts of the terms or words to best explain his or her invention, the terms or words must be understood as having meanings or concepts that conform to the technical spirit of the present disclosure. Also, since the example embodiments set forth herein and the configurations illustrated in the drawings are nothing but a mere example of the present disclosure, it is to be understood that various equivalents and modifications may replace the example embodiments and configurations at the time of the present application.

In the drawings, same elements will be indicated by same reference numerals. Also, redundant descriptions and detailed descriptions of known functions and elements that may unnecessarily make the gist of the present disclosure obscure will be omitted. In the accompanying drawings, some elements may be exaggerated, omitted or briefly illustrated, and the sizes of the elements do not necessarily reflect the actual sizes of these elements.

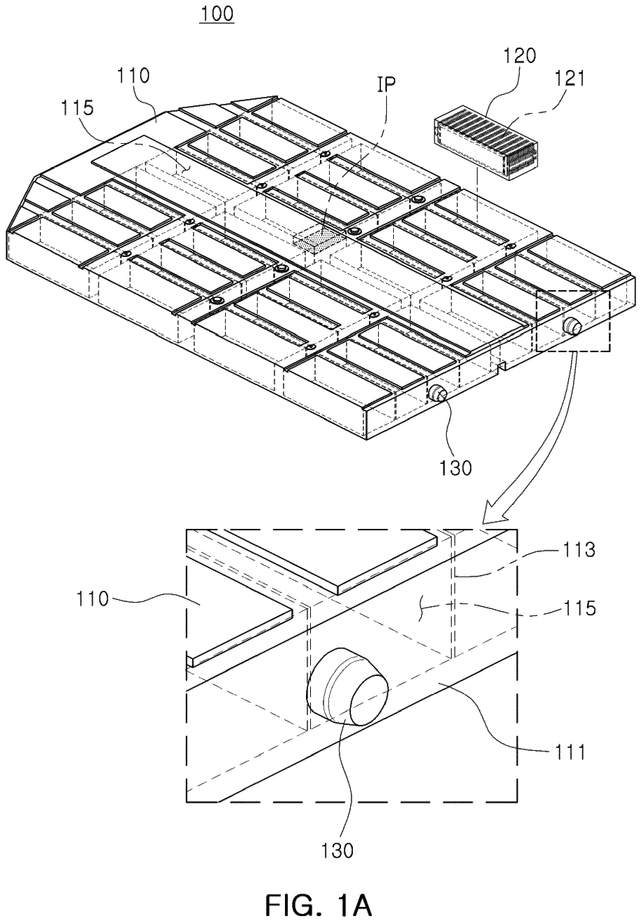

Referring to FIGS. 1A to 4, a battery pack 100 according to an example embodiment will be described.

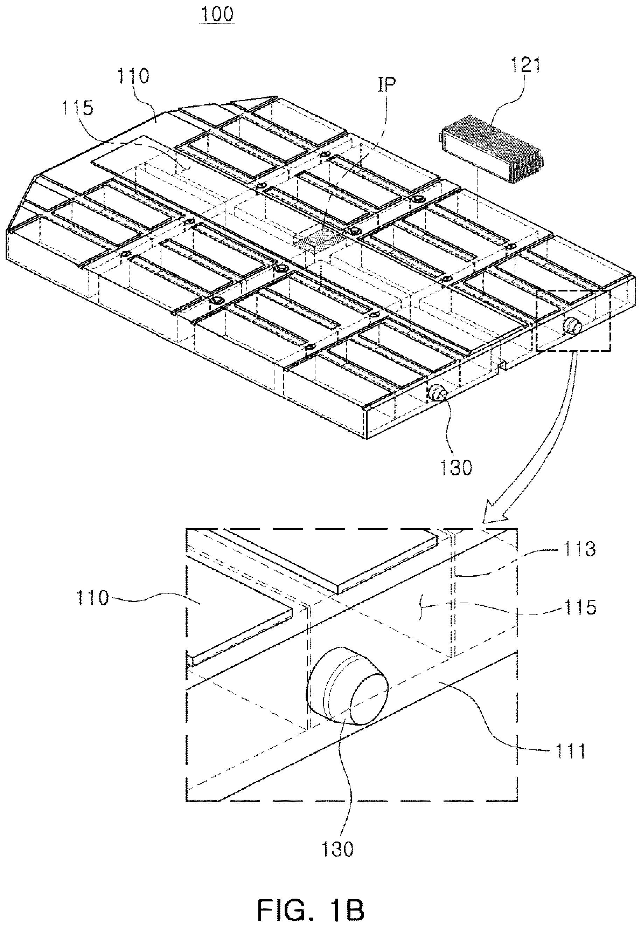

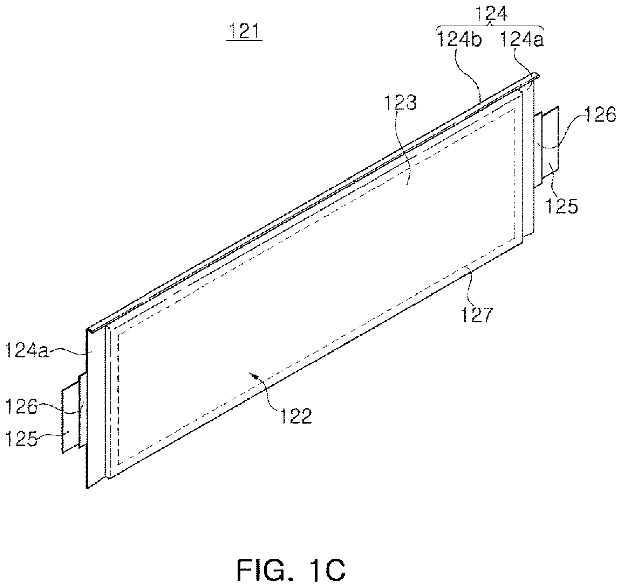

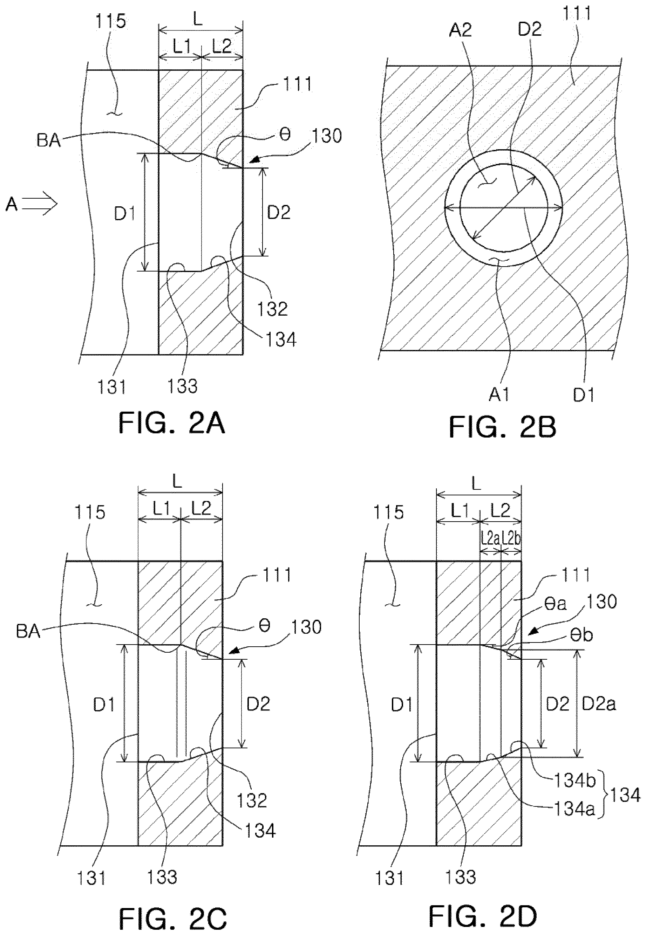

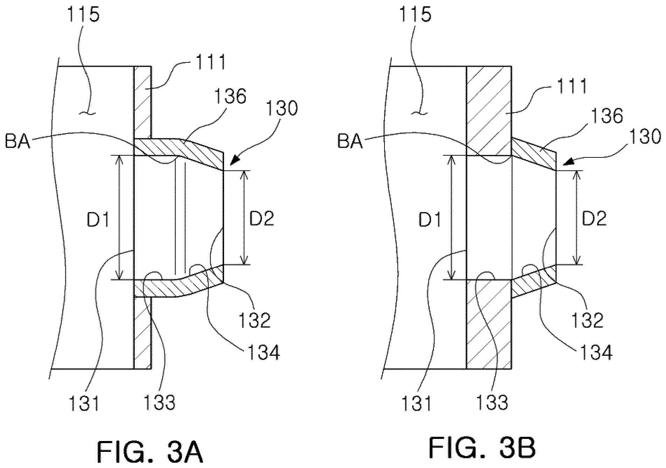

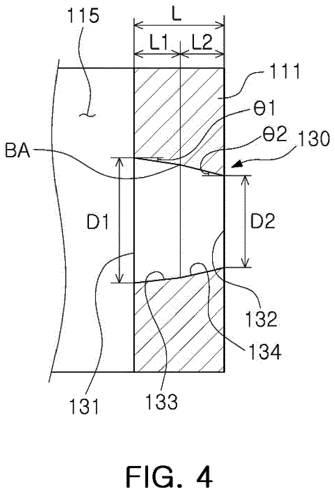

FIGS. 1A and 1B are a perspective diagram illustrating a battery pack 100 according to an example embodiment. FIG.1C is a perspective view of a battery cell according to an example embodiment. FIGS. 2A to 2D are diagrams illustrating examples of a venting member 130 provided in a battery pack 100 according to an example embodiment of the present disclosure, where FIG. 2A is a cross-sectional diagram illustrating a venting member 130 taken in a length direction, FIG. 2B is a diagram illustrating the venting member in FIG. 2A, viewed from "A," and FIGS. 2C and 2d are a diagram illustrating a modified example of the venting member in FIG. 2A. FIGS. 3A and 3B are cross-sectional diagrams illustrating a modified example of a venting member 130 provided in a battery pack 100 according to an example embodiment. FIG. 4 is a cross-sectional diagram illustrating another modified example of a venting member 130 provided in a battery pack 100 according to an example embodiment.

As illustrated in FIG. 1A, the battery pack 100 according to an example embodiment may include a pack housing 110 having an internal space 115 and a venting member 130.

An internal space 115 of a predetermined size may be formed in the pack housing 110, and a plurality of battery modules 120 may be installed therein. Each battery module 120 may have a modular structure in which a plurality of battery cells 121 are electrically connected to each other, and the pack housing 110 may have a structure in which the plurality of battery modules 120 are electrically connected to each other. Also, a partition member 113 may be installed in the pack housing 110 to support the battery module 120.

FIG. 1A illustrates the example in which the plurality of battery cells 121 are modularized through the battery module 120 and are installed in the internal space 115 of the pack housing 110. However, as illustrated in FIG. 1B, the plurality of battery cells 121 may have a cell to pack (CTP) structure in which the plurality of battery cells 121 may be directly installed without using the battery module (i.e., without being modulized).

As illustrated in FIG. 1C, the battery cell 121 provided in the battery pack 100 may be configured as a pouch type secondary battery. The pouch-type secondary battery cell 121 may be formed through a pouch-type casing 122. The pouch-type casing 122 may be divided into an receiving portion 123 and a sealing portion 124. The receiving portion 123 may accommodate an electrode assembly 127 and an electrolyte (not illustrated) . The sealing portion 124 may be divided into a first sealing portion 124a in which an electrode lead 125 and an insulation film 126 are disposed and a second sealing portion 124b in which the electrode lead 125 is not disposed. As an example, in an example embodiment, the pouch-type battery cell 121 may include a lithium ion (Li-ion) battery or a nickel metal hydride (Ni-MH) battery which may be charged and discharged. However, in the example embodiment, the battery cell provided in the battery pack 100 is not limited to a pouch type secondary battery.

Also, a battery management system (BMS) (not illustrated) for controlling the battery cells or the battery module 120 may be provided in the pack housing 110.

The venting member 130 may be installed in the pack housing 110 and may be formed in an open shape to discharge a gas generated in the internal space 115 externally. In other words, the venting member 130 may be installed in a through structure on an external wall 111 portion of the pack housing 110 and may allow air to flow in and out of the pack housing 110. However, in the example embodiment, the venting member 130 is not limited to a completely open structure, and a filtration device such as a filtration membrane may be installed in the opening portion forming the venting member 130, and may have a cover (a membrane or a flap).

The battery cell may have a structure in which an electrode assembly (not illustrated) formed by stacking a positive electrode plate, a negative electrode plate, and a separator in the casing, and an electrolyte solution may be accommodated. In other words, the battery cell may be configured as a secondary battery which may be charged and discharged. The electrolyte contained in the casing may be gasified due to external impacts, internal defects, or the like, and the gasified electrolyte may be discharged externally of the battery cell.

The venting member 130 may discharge the electrolyte gas externally when the electrolyte gas is generated in the internal space 115 of the pack housing 110. In this case, the venting member 130 may maintain an open state without being closed so as to facilitate the flow of air through the venting member 130.

Also, a plurality of the venting members 130 may be disposed on the external wall 111 on one side of the pack housing 110 and may be spaced apart from each other such that the gas generated in the internal space 115 of the battery pack 100 may be smoothly discharged externally. For example, as illustrated in FIGS. 1A and 1B, the venting member 130 may be provided on both sides of the external wall 111 on one side with respect to a center. Alternatively, at least one venting member 130 may be installed on external wall 111 on one side of the pack housing 110, and at least one venting member 130 may be installed on an external wall different from the external wall on one side. For example, at least one venting member 130 may be installed on the external wall 111 on one side illustrated in FIGS. 1A and 1B, and at least one venting member 130 may also be installed on the opposite external wall opposing the external wall on one side and/or the other external wall connected to the external wall on one side. However, the arrangement position and the number of the venting members 130 are not limited thereto, and may be varied.

Referring to FIGS. 2A to 4, in the venting member 130, a cross-sectional area A2 of an outlet side 132 of the venting member 130 connected to an external space of the pack housing 110 is configured to be smaller than a cross-sectional area A1 of an inlet side 131 of the venting member 130 connected to the internal space 115. Also, the venting member 130 has an inlet opening having a first cross-sectional area A1 and an outlet opening having a second cross-sectional area A2 that is smaller than the first cross-sectional area A1.

In other words, when the cross-sectional area A1 of the inlet side 131 is larger than the cross-sectional area A2 of the outlet side 132, the electrolyte gas generated in the internal space 115 may be easily discharged externally through the venting member 130, differently from the example in which the cross-sectional areas of the inlet side 131 and the outlet side 132 are maintained the same. Accordingly, when a flame is generated in the battery pack 100 and the gas is discharged, an increase in pressure in the battery pack 100 may be limited. Also, since the cross-sectional area A2 of the outlet side 132 is smaller than the cross-sectional area A1 of the inlet side 131, the air outside the pack housing 110 may not easily flow into the internal space 115 through the venting member 130. Accordingly, the pressure in the battery pack 100 may not excessively increase and the inflow of external air (oxygen) may be effectively blocked.

Referring FIGS. 2A to 4, the venting member 130 includes a first region 133 connected to the inlet side 131 and having a relatively large cross-sectional shape, and a second region 134 connected to the outlet side 132 and having a relatively small cross-sectional shape. When calculating an average cross-sectional area for a predetermined length of the venting member 130 based on a cut-out surface according to the length direction of the venting member 130, the average cross-sectional area of the second region 134 has a value lower than the average cross-sectional area of the first region 133.

For example, as illustrated in FIGS. 2A, 2C to 3B, the first region 133 may extend from the inlet side 131 to the outlet side 132 in the same cross-sectional form, and the second region 134 may extend toward the outlet side 132 in a form in which a the cross-sectional area thereof may decrease further than that of the first region 133. That is, the first region 133 has a constant cross-sectional area along its entire extent, and a cross-sectional area of the second region 134 is reduced in a direction from the first region 133 to the outlet side 132.

Also, each of the first region 133 and the second region 134 may have a circular cross-sectional shape as illustrated in FIG. 2B. In this case, a diameter D1 of the inlet side 131 may have a shape larger than that of a diameter D2 of the outlet side 132.

Also, when each of the first region 133 and the second region 134 has a circular cross-sectional shape, the first region 133 of the venting member 130 may have a hollow cylindrical shape with a constant diameter D1, and the second region 134 may have a hollow truncated conical shape of which a diameter decreases toward the outlet side 132.

A boundary area BA in which a cross-sectional structure may change may be formed between the first region 133 and the second region 134. In this case, the boundary area BA between the first region 133 and the second region 134 may have a structure in which linear lines on the cross-sectional surface may meet each other such that an inclination may be formed as illustrated in FIGS. 2A and 3B. Alternatively, the boundary area BA between the first region 133 and the second region 134 may have a structure in which the first region 133 and the second region 134 may be connected to each other in a smooth curved surface (the curved portion is illustrated as a region between two vertical lines in FIGS. 2C and 3A).

Also, the second region 134 may be inclined at a single inclination angle θ as illustrated in FIGS. 2A, 2C, 3A and 3B, but as illustrated in FIG. 2D, the second region 134 may have a structure in which the second region 134 may be divided into two or more regions 134a, and 134b and inclination angles θa and θb in the regions may change. In this case, the inclination angle θb in the region 134b adjacent to the outlet side 132 may be configured to be greater than the inclination angle θa in the region 134a spaced apart from the outlet side 132, such that the diameter D2 of the outlet side 132 may be smaller than the diameter D2a of the portion disposed in the central portion of the second region 134.

As described above, when the venting member 130 has a circular cross-sectional surface, the possibility of vortexes or turbulence occurring in the air flowing in the venting member 130 may be reduced as compared to a rectangular cross-sectional surface, such that a smooth flow may be formed from the inlet side 131 to the outlet side 132. However, in the example embodiment, the cross-sectional shape of the venting member 130 may be varied, such as an elliptical cross-section, and a prismatic cross-sectional structure may not be excluded.

Also, the venting member 130 may have a structure in which an inclination angle is formed in both the first region 133 and the second region 134. For example, as illustrated in FIG. 4, the first region 133 may have a shape in which the cross-sectional area thereof may decrease at a first inclination angle θ1 in a length direction from the inlet side 133 to the outlet side 134, and the second region 134 may have a shape in which the cross-sectional area thereof may decrease at a second inclination angle θ2 greater than the first inclination angle θ1 in the direction from the inlet side 133 to the outlet side 134.

A length L2 of the second region 134 may be 0.2-0.8 times a distance from the inlet side 131 to the outlet side 132, that is, 0.2-0.8 times a total length L of the venting member 130. When the length L2 of the second region 134 is less than 0.2 times the total length L, the length of the second region 134 may be excessively shortened. Accordingly, since it is highly likely that external air may flow into through the shortened second region 134, the installation effect of the second region 134 may be reduced. When the length L2 of the second region 134 exceeds 0.8 times the total length L, the length L1 of the first region 133 may be excessively shortened. In this case, the second region 134 having a small cross-sectional area may be elongated, such that the gas in the internal space 115 may not be smoothly discharged through the second region 134, and accordingly, the pressure in the internal space 115 of the battery pack 100 may increase.

The cross-sectional area A2 of the outlet side 132 is configured to be 0.2-0.8 times the cross-sectional area A1 of the inlet side 131. When the cross-sectional area A2 of the outlet side 132 is less than 0.2 times the cross-sectional area A1 of the inlet side 131, the cross-sectional area A2 of the outlet side 132 may be excessively reduced such that the gas in the internal space 115 of the battery pack 100 may not be smoothly discharged externally, and the pressure in the battery pack 100 may increase. When the cross-sectional area A2 of the outlet side 132 exceeds 0.8 times the cross-sectional area A1 of the inlet side 131, a difference in diameter (cross-sectional area) between the two sides may significantly decrease, such that the effect of smoothly discharging the internal air and reducing the inflow of external air using the different in the cross-sectional areas may decrease.

The cross-sectional area A2 of the outlet side 132 may be configured to be 0.4-0.7 times the cross-sectional area A1 of the inlet side 131. In this case, by securing the cross-sectional area A2 of the outlet side 132, the effect of smoothly discharging the gas in the internal space 115 of the battery pack 100 externally and the effect of reducing the inflow of external air using the difference between the cross-sectional areas of the inlet side 131 and the outlet side may be obtained.

Specific values of the cross-sectional area A1 of the inlet side 131 of the venting member 130, the cross-sectional area A2 of the outlet side 132, the length L1 of the first region 133, the length L2 of the second region 134 may be determined depending on the volume of the internal space 115 of the battery pack 100 and the position and shape of the venting hole.

Also, in FIGS. 1 to 4, only the example in which the venting member 130 has the first region 133 and the second region 134 is illustrated, but a third region of which a cross-sectional shape in the length direction of the venting member 130 is different from those of the first region 133 and the second region 134 may be provided between the first region 133 and the second region 134. In other words, a third region having a value between the average cross-sectional area of the first region 133 and the average cross-sectional area of the second region 134 may be provided between the first region 133 and the second region 134.

The venting member 130 may be formed in the shape of a hole in the external wall 111 of the pack housing 110 when the external wall of the pack housing 110 has a sufficient thickness. In other words, as illustrated in FIG. 2, the venting member 130 may be formed by processing a hole of which a diameter D1 of the inlet side 131 is greater than a diameter D2 of the outlet side 132 in the external wall 111 portion of the pack housing 110.

When the thickness of the external wall 111 of the pack housing 110 is not sufficient, as illustrated in FIGS. 3A and 3B, the venting member 130 may have a shape in which at least a portion of the venting member 130 protrudes to an external side of the external wall 111 of the pack housing 110. For example, when the length of the venting member 130 is 48mm and the thickness of the external wall 111 is 20mm, the venting member 130 may have a structure protruding externally of the pack housing 110 by 28mm.

Also, the venting member 130 may be formed of a venting guide member 136 attached to the external wall 111 of the pack housing 110. The venting guide member 136 may have a shape in which a first region 133 and a second region 134 are formed as illustrated in FIG. 3A. In this case, the venting guide member 136 may be mounted on an internal surface of the hole formed in the pack housing 110 while being aligned with the internal side surface of the external wall 111. Alternatively, the venting guide member 136 may have a shape in which only a partial region of the venting member 130 is formed as illustrated in FIG. 3B. In this case, the venting guide member 136 may have a shape in which the venting guide member 136 is attached to the external side surface of the external wall 111.

Referring to FIGS. 2A to 4, the inlet side 131 of the venting member 130 may be disposed on the same surface as the internal surface of the external wall 111 of the pack housing 110. When the inlet side 131 of the venting member 130 has a pipe shape protruding inwardly to the internal surface of the external wall of the pack housing 110, vortex or turbulence may occur on a circumference of the inlet side 131 protruding in the shape of a pipe to the internal space 115. For example, when it is assumed that the venting guide member 136 in FIG. 3A extends to the left, the phenomenon (e.g., vortex) in which the air flowing along the internal surface of the external wall of the pack housing 110 may not directly flow into the inlet of the venting guide member and may not uniformly flow may occur. However, as in an example embodiment, when the inlet side 131 of the venting member 130 is disposed on the same surface as the internal surface of the external wall of the pack housing 110, the gas in the internal space 115 may flow along the internal surface of the external wall 115, and may easily flow to the inlet side 131 of the venting member 130 and discharged externally, such that the flow of gas discharged from the pack housing 110 may improve.

An effect of the battery pack 100 according to an example embodiment will be described with reference to FIGS. 1, 2A, and 5 to 11C.

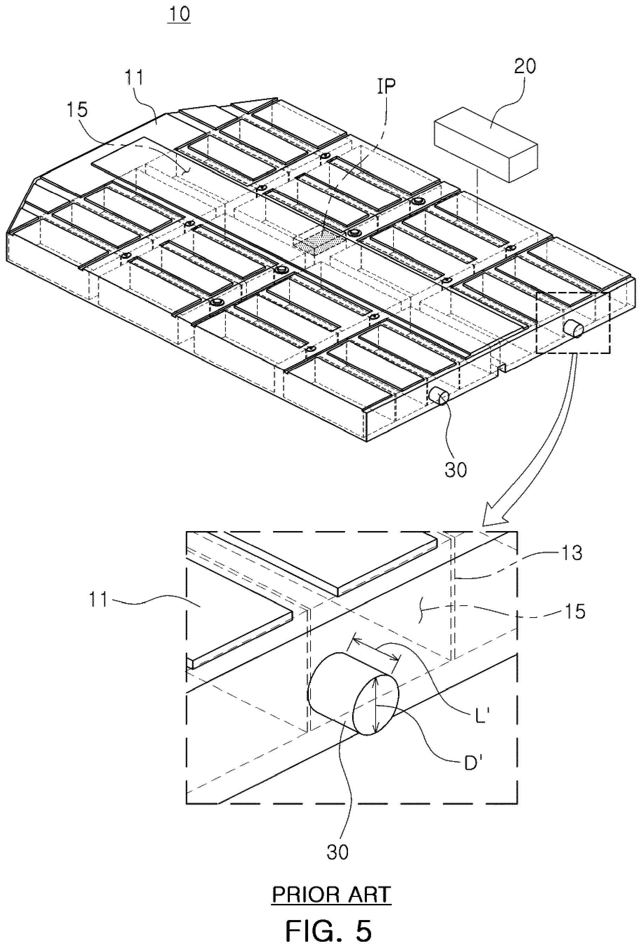

FIG. 5 is a perspective diagram illustrating a battery pack 10 in the prior art. The battery pack 10 in the prior art illustrated in FIG. 5 may include a pack housing 11 and a venting member 30, and a partition wall 13 and a plurality of battery modules 20 may be disposed in the internal space 15 of the pack housing 11. Also, the venting member 30 may be configured to have a shape in which a space of a predetermined diameter D' extends by a predetermined length L'.

Flow analysis was performed on the assumption that a flame occurred at the ignition point IP of the central portion of the pack housing 11 with respect to the battery pack 10 in the prior art illustrated in FIG. 5. In this case, only the flow patterns in the internal space 15 and the venting member 30 were analyzed without considering the heat transfer in the pack housing 10.

The analysis was performed using a compressive fluid model with a Mach number of about 0.4, and it was assumed that fluid was generated at a constant flow rate (21 m/s or less) in an upward direction from the ignition point IP illustrated in FIG. 5. The turbulence model was analyzed by applying Spalart-Allmaras.

FIG. 6 is analysis diagrams illustrating a flow rate of fluid when ignition occurs in the battery pack 10 in the prior art illustrated in FIG. 5. FIG. 6A illustrates a velocity of fluid when a diameter D' of the venting member is 50mm and a length L' is 48mm, and FIG. 6B illustrates a velocity of fluid when a diameter of the venting member is 40mm and a length L' is 48mm.

Referring to FIGS. 6A and 6B, most of the fluid generated at the ignition point IP had a flow pattern in which the fluid flowed along the upper space of the pack housing 11, which has a relatively wide space, and flowed to the front end (-x direction) and the rear end (+x direction) of the pack housing 11. Also, most of the fluid flowing to the side (±y direction) at the ignition point IP had a tendency to spread to the central passage. Also, the fluid flowing to the rear end (+x direction) of the pack housing 11 exhibited a flow pattern in which the fluid flowed along the internal wall surface of the external wall and was discharged at high velocity through the venting member 30.

A flow pattern in the venting member 30 of the prior art will be described with reference to FIGS. 7A to 8B.

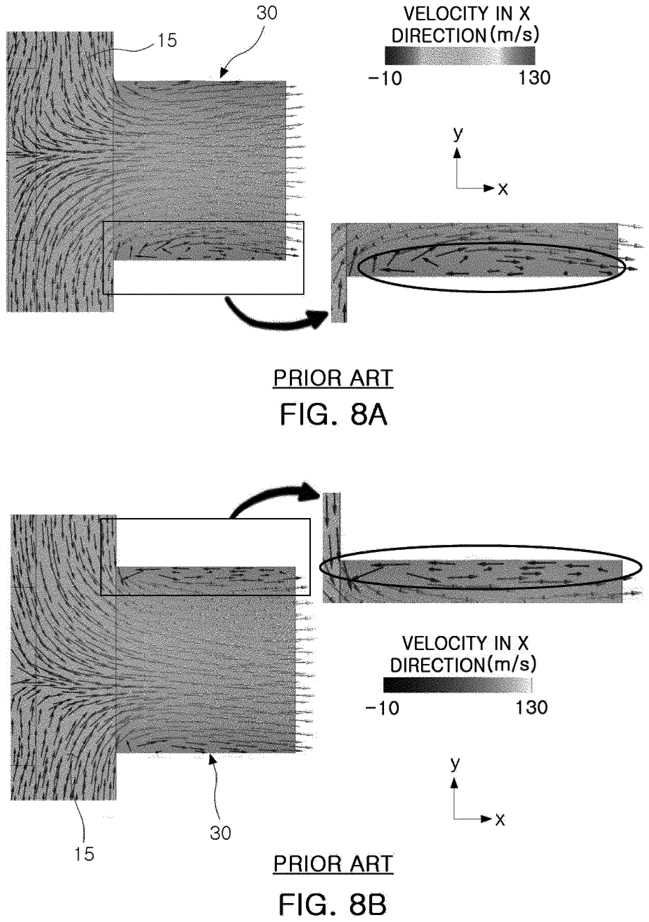

FIG. 7A illustrates a velocity of fluid with respect to portion V1 in FIG. 6A. FIG. 7B illustrates a velocity of fluid with respect to portion V2 in FIG. 6A. FIG. 8A is an analysis diagram illustrating a velocity and a direction of fluid illustrated in FIG. 7A. FIG. 8B is an analysis diagram illustrating a velocity and a direction of fluid illustrated in FIG. 7B.

Referring to FIGS. 7A and 8A, in the first venting member V1, the area (the dark black portion in FIG. 7A and the portion in FIG. 8A in which the arrow are directed in the -x direction) in which the velocity was lowered was formed in the lower side portion of the venting member 30 in the drawing, and as illustrated in the enlarged portion in FIG. 8A, the velocity region toward the internal space 15 was consecutively formed from the external side region of the venting member 30 to the internal space 15 in the lower side portion of the venting member 30 in the drawing.

Also, referring to FIGS. 7B and 8B, in the second venting member V2, the area (the dark black portion in FIG. 7B and the portion in FIG. 8A in which the arrow are directed in the -x direction) in which the velocity was lowered was formed in the upper side portion of the venting member 30 in the drawing, and as illustrated in the enlarged portion in FIG. 8B, the velocity region toward the internal space 15 was consecutively formed from the external side region of the venting member 30 to the internal space 15 in the upper side portion of the venting member 30 in the drawing.

As described above, the extension of the velocity region from the outer region of the venting member 30 to the internal space 15 may indicate that, when the gas generated at the ignition point IP is discharged through the venting member 30 externally, the external air flows into the internal space 15 through a partial region of the venting member 30 (the internal wall surface of the venting member 130). In other words, the venting member 30 of the prior art illustrated in FIGS. 6A and 7A to 8B had a shape in which the diameter is maintained to be 50 mm, and in this case, it was confirmed that the external air and oxygen contained therein flowed into the internal space 15 of the pack housing 11. The oxygen flowing thereinto may be transferred to the flame and may cause an explosion of the battery pack 10 or rapid spread of the flame in the battery pack 10. Accordingly, the flame in the battery pack 10 may easily spread externally of the battery pack 10, which may be problematic.

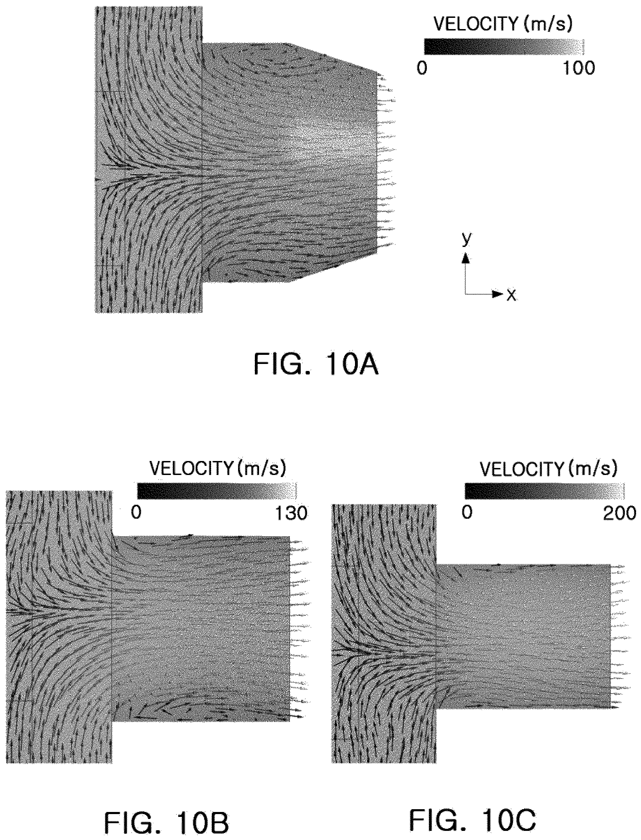

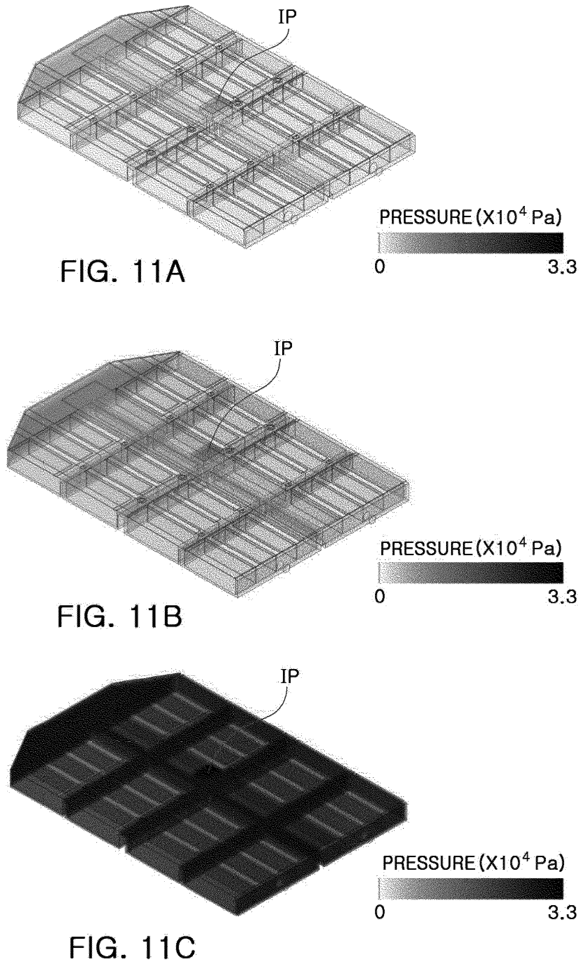

When the diameter of the venting member 30 was reduced from 50mm to 40mm as illustrated in FIG. 6B, since the cross-sectional area of the venting member 30 was reduced by 36% as compared to FIG. 6A, as illustrated in FIGS. 9C and 10C, the flow of the gas generated at the ignition point IP and discharged externally through the venting member 30 was strongly formed, such that the gas discharge rate rapidly increased. Accordingly, it was confirmed that the velocity region toward the internal space 15 of the pack housing 11 was extremely low in the venting member 30, and the external air did not flow into the internal space 15. However, when the diameter was reduced, the gas generated at the ignition point IP was not sufficiently discharged through the venting member 30, such that the average pressure in the battery pack 10 rapidly decreased to 2.9×10⁴ Pa as illustrated in FIG. 11C. When the pressure in the battery pack 10 increases while a fire (flame) occurs in the battery pack 10, the battery pack 10 may be deformed or damaged, and the flame in the battery pack 10 may be directly exposed externally of the battery pack 10, which may lead to a large fire outside the battery pack 100.

In the description below, the possibility of preventing an explosion (explosion of flame) or preventing spread of flame externally when a fire (flame) occurs in the battery pack 100 with respect to an example embodiment and the prior art will be described with reference to FIGS. 9A to 11C.

FIGS. 9A to 9C are analysis diagrams illustrating comparison of a velocity of fluid in venting members 30 and 130 between a battery pack of an example embodiment and the prior art. FIG. 9A illustrates a velocity of fluid in a venting member 130 according to an example embodiment, FIG. 9B relates to the prior art illustrated in FIG. 6A, illustrating a velocity (the same as in FIG. 7B) of fluid in a venting member 30 having a diameter D' of 50mm and a length L' of 48mm, and FIG. 9C relates to the prior art illustrated in FIG. 6B, illustrating a velocity of fluid in a venting member 30 having a diameter D' of 40mm and a length L' of 48mm.

As for the venting member 130 in FIG. 9A, a diameter D1 of the inlet side 131 was 66 mm, a diameter D2 of the outlet side 132 was 50 mm, the entire length L of the venting member 130 was 48mm, the length L1 of the first region 133 was 24 mm, and the length L2 of the second region 134 was 24 mm, and to be compared with the prior art, the pack housing 110 had the same structure and the same shape as those of the pack housing 11 of the prior art illustrated in FIGS. 5, 6A and 6B.

FIGS. 10A to 10C are analysis diagrams illustrating a velocity and a direction of fluid with respect to an example embodiment and the prior art illustrated in FIGS. 9A to 9C.

FIGS. 11A to 11C are analysis diagrams illustrating distribution of internal pressure of the battery packs 10 and 100 with respect to an example embodiment and the prior art illustrated in FIGS. 9A to 9C. The internal average pressure of the battery packs 10 and 100 was 6.6×10³ Pa in FIG. 11A, 1.0×10⁴ Pa in FIG. 11B, and 2.9×10⁴ Pa in FIG. 11C.

Referring to FIGS. 9B and 10B, as for the prior art in which the diameter of the venting member 30 was 50 mm, as described with reference to FIGS. 7B and 8B, the velocity region toward the internal space 15 was consecutively formed from the external side region of the venting member 30 to the internal space 15. Accordingly, in the prior art in which the diameter of the venting member 30 was 50 mm, when the gas generated at the ignition point IP was discharged externally through the venting member 30, the external air flowed into the internal space 15 through a partial region (internal wall surface) of the venting member 30. Therefore, oxygen in the external air flowed into the internal space 15 of the pack housing 11 and was transferred to the flame, such that explosion of the battery pack 10 or amplification of the flame may occur, and accordingly, the fire may easily spread externally of the battery pack 10.

Also, in the prior art in which the diameter of the venting member 30 was reduced from 50mm to 40mm, as illustrated in FIGS. 9C and 10C, it was confirmed that the flow of the gas generated at the ignition point IP and discharged through the venting member 30 was strongly formed, such that the external air rarely flowed into the internal space 15. However, it was confirmed that the gas generated at the ignition point IP was not sufficiently discharged through the venting member 30, such that the average pressure in the battery pack 10 rapidly increased to 2.9×10⁴ Pa as illustrated in FIG. 11C. In other words, in the prior art in FIG. 11C, the average pressure increased three times as compared to the average pressure (1.0×10⁴ Pa) of the prior art in FIG. 11B. As described above, when the pressure in the battery pack 10 increases while a fire (flame) has occurred in the battery pack 10, the battery pack 10 may be deformed or damaged, such that the flame in the battery pack 10 may be directly exposed externally of the battery pack 10 and may lead to a large fire outside the battery pack 10.

However, as in the example embodiment, as for the venting member 130 of which a diameter D1 of the inlet side 131 was 66 mm, and a diameter D2 of the outlet side 132 was 50 mm, as illustrated in FIG. 9A and 10A, a velocity region toward the internal space 115 was formed in the venting member 130. However, this reverse velocity region was partially formed in the boundary region BA between the first region 133 and the second region 134, and did not connect the internal space 115 to the external space, which are both sides of the venting member 130. In other words, since the velocity region toward the internal space 115 was not connected to the external space in the boundary region BA, the external air did not flow into. Further, in the example embodiment, as illustrated in FIG. 11A, the average pressure in the battery pack 100 was 6.6×10³ Pa, which was rather less than the average pressure (1.0×10⁴ Pa) of the prior art in FIG. 11B which had the same diameter D2 (50 mm) of the outlet side.

Therefore, as in the example embodiment, when the cross-sectional area A1 of the first region 133 or the diameter D1 of the inlet side 131 is configured to be greater than the cross-sectional area A2 of the second region 134 or the diameter D2 of the outlet side 132, even while the flame is generated in the battery pack 100 and the gas is discharged externally through the venting member 130, oxygen in the external air may not flow into the internal space 115, such that the increase of flame or explosion in the battery pack 100 may be reduced. Further, even when the flame occurs in the battery pack 100, the internal average pressure may not rapidly increase, such that rapid exposure of the flame externally due to deformation or damage of the battery pack 100 may be prevented. Therefore, according to the example embodiment, the spread of the flame in the battery pack 100 to be outside may be delayed for a considerable time, such that the safety of the battery pack 100 against fire may be secured.

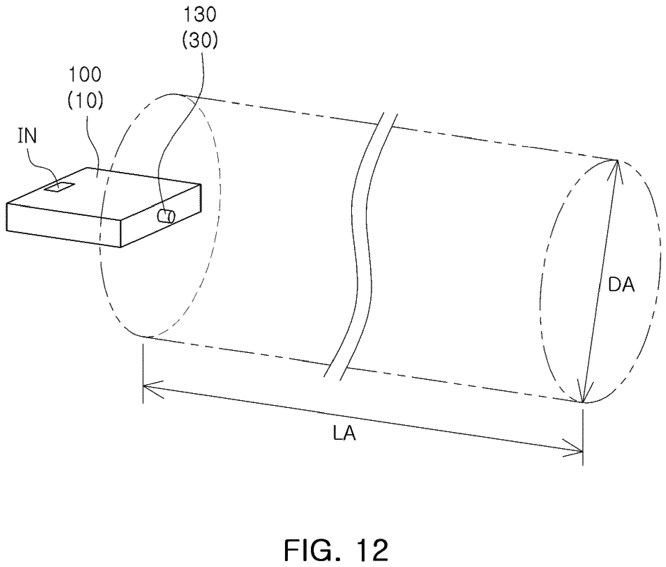

In the description below, the possibility of flame occurring outside due to leakage of electrolyte gas when the electrolyte gas is rapidly discharged from the battery packs 10 and 100 with respect to an example embodiment and the prior art will be described with reference to FIGS. 12 to 15C.

FIG. 12 is a diagram illustrating an overall structure used in analysis of the state in which electrolyte gas is discharged from the battery packs 10 and 100 with respect to an example embodiment and the prior art. In FIG. 12, an inlet IN for injecting the electrolyte gas was disposed on one side of the battery packs 10 and 100, and the electrolyte gas was discharged through the venting members 30 and 130 according to the example embodiment and the prior art. As for the analysis area, the diameter DA was determined to be 1000 mm and the length LA was determined to be 4000 mm.

Also, the composition of the electrolyte gas was determined to be H₂ of 10%, CH₄ of 5%, C₂H₄ of 10%, CO of 15%, CO₂ of 60% based on the volume fraction. The velocity of the electrolyte gas flowing through the inlet IN was determined to be 21 m/s, and the temperature determined to be 723K.

In the example embodiment, in the venting member 130, a diameter D1 of the inlet side 131 was 40 mm, a diameter D2 of the outlet side 132 was 20 mm, and a length L was 48 mm, and in the venting member 30 in the prior art, the example (comparative example 1) in which a diameter D' was determined to be 50mm and the length L' was determined to be 48mm, and the example (comparative example 2) in which the diameter D' was determined to be 20mm, and the length L' was determined to be 48mm were used as comparative analysis targets.

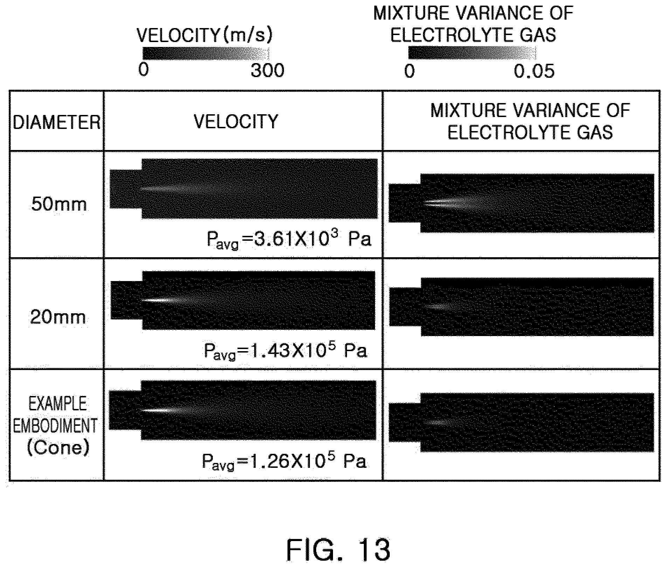

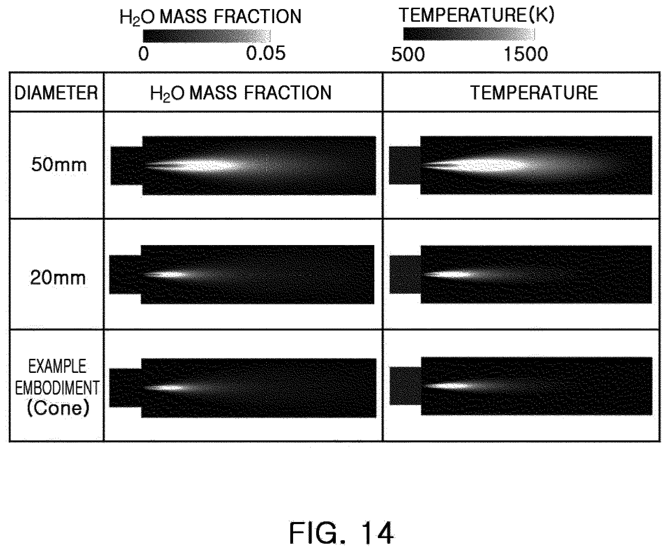

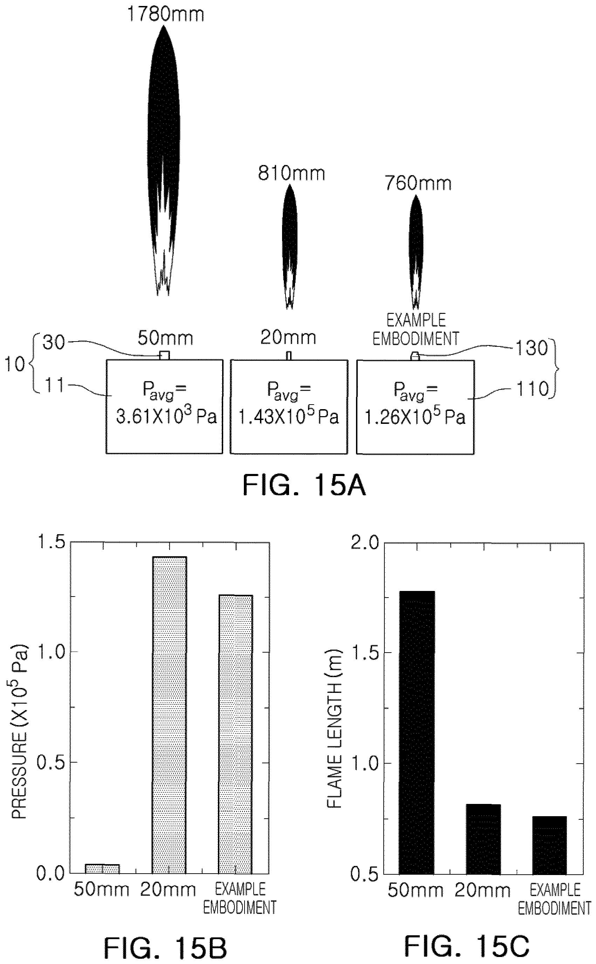

FIG. 13 is an analysis diagram illustrating distribution of a velocity of electrolyte gas and distribution of mixture variance of electrolyte gas discharged from venting members 30 and 130 with respect to an example embodiment and the prior art. FIG. 14 is an analysis diagram illustrating distribution of H₂O mass fraction and distribution of temperature of the electrolyte gas discharged from venting members 30 and 130 with respect to an example embodiment and the prior art. FIGS. 15A to 15C are diagrams illustrating comparison of a length of flame the electrolyte gas discharged from venting members 30 and 130 and an average pressure in the battery packs 10 and 100.

The distribution of the mixture variance of electrolyte gas in FIG. 13 indicates a distribution in which the composition changed by reacting with oxygen in the atmosphere after the electrolyte gas was released from the venting members 30 and 130, the H₂O mass fraction distribution indicates the distribution of the amount of H₂O generated by reacting with oxygen in the atmosphere after the electrolyte gas was released from the venting members 30 and 130, and the temperature distribution in FIG. 14 indicates the temperature change distribution in the analysis space due to the flame. the larger the size and area of the mixture variance of the electrolyte gas, the larger the size and area of the h₂o mass fraction, and the higher the temperature and the larger the range of the area, the more the flame outside the battery pack 100 increased due to the electrolyte gas discharged from the venting members 30 and 130.

As for the comparison between the example embodiment, and the prior art (comparative example 1) in which the diameter of the venting member 130 was 50mm and the prior art (comparative example 2) in which the diameter of the venting member 130 was 20mm, according to a result of analysis of combustion (possibility of external flame) outside the battery packs 10 and 100 due to leakage of electrolyte gas when the electrolyte gas was rapidly discharged through the venting members 30 and 130, the smaller the diameters of the tinting portions 30 and 130, the more the mixture variance of the electrolyte gas in FIG. 13 and the distribution region of H₂O mass fraction and the temperature in FIG. 14 increased, and the values thereof increased. Also, as illustrated in FIG. 15A, the smaller the diameter of the venting members 30 and 130, the smaller the flame length. This is because, as the diameter of the venting members 30 and 130 decreased as in the example embodiment (the diameter of the outlet side was 20mm) or comparative example 2 (the diameter was 20mm), the possibility of flame outside the battery packs 10 and 100 due to electrolyte gas leakage may decrease.

As the diameter of the venting members 30 and 130 decreased, the electrolyte gas ejection rate may increase as illustrated in FIG. 13 and the average pressure in the battery packs 10 and 100 may greatly increase as illustrated in FIGS. 13 and 15B. The increase in the average pressure in the battery packs 10 and 100 may cause deformation or damage of the battery packs 10 and 100, and may be accompanied by rapid discharge of the electrolyte gas. The example embodiment (the diameter of the inlet side was 40 mm, and the diameter of the outlet side was 20 mm) had the same diameter of the outlet side as that of comparative example 2 (diameter of 20 mm), but had the greater diameter D1 of the inlet side, such that the pressure decreased by 12% as compared to comparative example 2. Thus, the battery pack 100 was less broken or damaged as compared to comparative example 2.

As described above, as in the example embodiment, when the cross-sectional area A1 of the first region 133 or the diameter D1 of the inlet side 131 is configured to be greater than the cross-sectional area A2 of the second region 134 or the diameter D2 of the outlet side 132, the possibility of flame outside the battery pack 100 due to electrolyte gas leakage when the electrolyte gas is rapidly discharged through the venting member 130 may be lowered, and rapid exposure of the flame externally due to deformation or breakage may be prevented. In particular, by adjusting the cross-sectional area A1 of the first region 133 or the diameter D1 of the inlet side 131 and the cross-sectional area A2 of the second region 134 or the diameter D2 of the outlet side 132, the stable battery pack 100 may be implemented.

According to the aforementioned example embodiment, even when a flame is generated in the battery pack, the spread of the flame externally may be sufficiently delayed.

Also, the inflow of external air into the battery pack through the venting member may be prevented while the flame is generated in the battery pack and the gas is discharged externally through the venting member. Accordingly, the possibility of explosion of the battery pack or flame amplification caused by the inflow of oxygen while the flame occurs in the battery pack may be reduced. In addition, the increase of pressure in the battery pack may be reduced such that the effect of preventing damage to the battery pack and leakage of the flame externally may be obtained.

Further, even when a large amount of the electrolyte gas in the battery pack is discharged externally, the possibility of ignition and flame due to the discharged electrolyte gas may be reduced.

While the example embodiments have been illustrated and described above, it will be apparent to those skilled in the art that modifications and variations could be made without departing from the scope of the present disclosure as defined by the appended claims.

## Claims

1. A battery pack, comprising:
a pack housing having an internal space in which a plurality of battery modules are installed or a plurality of battery cells are installed directly without being modulized; and
a venting member installed in the pack housing and configured to discharge gas generated in the internal space externally,
wherein the venting member is configured such that a cross-sectional area of an outlet side of the venting member connected to an external space of the pack housing is smaller than a cross-sectional area of an inlet side of the venting member connected to the internal space, wherein
the venting member is configured to include a first region connected to the inlet side and a second region connected to the outlet side,
an average cross-sectional area of the second region has a value lower than an average cross-sectional area of the first region, and
a cross-sectional area of the outlet side is configured to be 0.2-0.8 times a cross-sectional area of the inlet side.

2. The battery pack of claim 1,
wherein the first region has a constant cross-sectional area along its entire extent, and
wherein a cross-sectional area of the second region is reduced in a direction from the first region to the outlet side.

3. The battery pack of claim 2, wherein the first region and the second region have a circular cross-sectional shape.

4. The battery pack of claim 2,
wherein the first region has a hollow cylindrical shape, and
wherein the second region has a hollow truncated conical shape.

5. The battery pack of claim 2, wherein a length of the second region is configured to be 0.2-0.8 times a distance from the inlet side to the outlet side.

6. The battery pack of claim 1, wherein a cross-sectional area of the outlet side is configured to be 0.4-0.7 times a cross-sectional area of the inlet side.

7. The battery pack of claim 1,
wherein the first region has a shape in which the cross-sectional area thereof decreases at a first inclination angle in a direction from the inlet side to the outlet side, and
wherein the second region has a shape in which the cross-sectional area thereof decreases at a second inclination angle greater than the first inclination angle in the direction from the inlet side to the outlet side.

8. The battery pack of claim 1, wherein the inlet side of the venting member is disposed on the same surface as an internal surface of an external wall of the pack housing.

9. The battery pack of claim 1, wherein the venting member is formed in a shape of a hole in an external wall of the pack housing.

10. The battery pack of claim 1, wherein the venting member has a shape in which at least a portion of the venting member protrudes to an external side of an external wall of the pack housing.

11. The battery pack of claim 10, wherein at least a portion of the venting member includes a venting guide member attached to the external wall of the pack housing.

12. The battery pack of claim 1, wherein at least one or more additional venting members identical to the venting member are provided, and wherein the plurality of the venting members are spaced apart from each other on an external wall on one side of the pack housing.

13. The battery pack of claim 1, wherein the venting member maintains an open state without being closed such that air flows through the venting member.

14. A battery pack, comprising:
a pack housing including a partition member creating a plurality of internal spaces configured to receive at least one battery module; and
at least one venting member for discharging gas generated in the internal space externally of the pack housing,
wherein the venting member has an inlet opening having a first cross-sectional area and an outlet opening having a second cross-sectional area that is smaller than the first cross-sectional area, wherein
the venting member is configured to include a first region connected to the inlet side and a second region connected to the outlet side,
an average cross-sectional area of the second region has a value lower than an average cross-sectional area of the first region, and
a cross-sectional area of the outlet side is configured to be 0.2-0.8 times a cross-sectional area of the inlet side.

## Patentansprüche

1. Batteriepackung, umfassend:
ein Packungsgehäuse, das einen Innenraum aufweist, in dem eine Vielzahl von Batteriemodulen installiert ist oder eine Vielzahl von Batteriezellen direkt installiert ist, ohne modularisiert zu sein; und
ein Belüftungselement, das im Packungsgehäuse installiert und so eingerichtet ist, dass es im Innenraum erzeugtes Gas nach außen ableitet,
wobei das Belüftungselement so eingerichtet ist, dass eine Querschnittsfläche einer Auslassseite des Belüftungselements, die mit einem Außenraum des Packungsgehäuses verbunden ist, kleiner ist als eine Querschnittsfläche einer Einlassseite des Belüftungselements, die mit dem Innenraum verbunden ist, wobei
das Belüftungselement so eingerichtet ist, dass es einen ersten Bereich enthält, der mit der Einlassseite verbunden ist, und einen zweiten Bereich, der mit der Auslassseite verbunden ist,
eine durchschnittliche Querschnittsfläche des zweiten Bereichs einen geringeren Wert aufweist als eine durchschnittliche Querschnittsfläche des ersten Bereichs, und
eine Querschnittsfläche der Auslassseite so gestaltet ist, dass sie das 0,2-0,8-fache einer Querschnittsfläche der Einlassseite beträgt.

2. Batteriepackung nach Anspruch 1,
wobei der erste Bereich über seine gesamte Ausdehnung eine konstante Querschnittsfläche aufweist, und
wobei eine Querschnittsfläche des zweiten Bereichs in einer Richtung vom ersten Bereich zur Auslassseite hin verringert ist.

3. Batteriepackung nach Anspruch 2, wobei der erste Bereich und der zweite Bereich eine kreisförmige Querschnittsform aufweisen.

4. Batteriepackung nach Anspruch 2,
wobei der erste Bereich eine hohle, zylindrische Form aufweist, und
wobei der zweite Bereich eine hohle, kegelstumpfförmige Form aufweist.

5. Batteriepackung nach Anspruch 2, wobei eine Länge des zweiten Bereichs so gestaltet ist, dass sie das 0,2-0,8-fache eines Abstands von der Einlassseite zur Auslassseite beträgt.

6. Batteriepackung nach Anspruch 1, wobei eine Querschnittsfläche der Auslassseite so gestaltet ist, dass sie das 0,4-0,7-fache einer Querschnittsfläche der Einlassseite beträgt.

7. Batteriepackung nach Anspruch 1,
wobei der erste Bereich eine Form aufweist, bei der seine Querschnittsfläche in einem ersten Neigungswinkel in einer Richtung von der Einlassseite zur Auslassseite abnimmt, und
wobei der zweite Bereich eine Form aufweist, bei der seine Querschnittsfläche in einem zweiten Neigungswinkel, der größer als der erste Neigungswinkel ist, in der Richtung von der Einlassseite zur Auslassseite abnimmt.

8. Batteriepackung nach Anspruch 1, wobei die Einlassseite des Belüftungselements auf der gleichen Oberfläche wie eine Innenfläche einer Außenwand des Packungsgehäuses angeordnet ist.

9. Batteriepackung nach Anspruch 1, wobei das Belüftungselement in Form eines Lochs in einer Außenwand des Packungsgehäuses ausgebildet ist.

10. Batteriepackung nach Anspruch 1, wobei das Belüftungselement eine Form aufweist, bei der mindestens ein Teil des Belüftungselements zu einer Außenseite einer Außenwand des Packungsgehäuses hin vorsteht.

11. Batteriepackung nach Anspruch 10, wobei mindestens ein Teil des Belüftungselements ein Belüftungsführungselement enthält, das an der Außenwand des Packungsgehäuses angebracht ist.

12. Batteriepackung nach Anspruch 1, wobei mindestens ein oder mehrere zusätzliche Belüftungselemente vorgesehen sind, die mit dem Belüftungselement identisch sind, und wobei die Vielzahl der Belüftungselemente an einer Außenwand auf einer Seite des Packungsgehäuses voneinander beabstandet sind.

13. Batteriepackung nach Anspruch 1, wobei das Belüftungselement einen offenen Zustand beibehält, ohne geschlossen zu sein, so dass Luft durch das Belüftungselement strömt.

14. Batteriepackung, umfassend:
ein Packungsgehäuse, das ein Unterteilungselement enthält, das eine Vielzahl von Innenräumen bildet, die zur Aufnahme mindestens eines Batteriemoduls eingerichtet sind; und
mindestens ein Belüftungselement zum Ablassen von im Innenraum erzeugtem Gas nach außerhalb des Packungsgehäuses,
wobei das Belüftungselement eine Einlassöffnung mit einer ersten Querschnittsfläche und eine Auslassöffnung mit einer zweiten Querschnittsfläche, die kleiner als die erste Querschnittsfläche ist, aufweist, wobei
das Belüftungselement so eingerichtet ist, dass es einen ersten Bereich enthält, der mit der Einlassseite verbunden ist, und einen zweiten Bereich, der mit der Auslassseite verbunden ist,
eine durchschnittliche Querschnittsfläche des zweiten Bereichs einen geringeren Wert aufweist als eine durchschnittliche Querschnittsfläche des ersten Bereichs, und
eine Querschnittsfläche der Auslassseite so gestaltet ist, dass sie das 0,2-0,8-fache einer Querschnittsfläche der Einlassseite beträgt.

## Revendications

1. Bloc de batterie, comprenant :
un boîtier d'emballage comprenant un espace intérieur dans lequel une pluralité de modules de batterie sont installés ou une pluralité d'éléments de batterie sont installés directement sans être modularisés ; et
un élément de ventilation installé dans le corps du garnissage et agencé de manière à évacuer vers l'extérieur le gaz produit à l'intérieur,
dans lequel l'élément d'aération est agencé de telle sorte qu'une surface en section transversale d'un côté de sortie de l'élément d'aération, qui est relié à un espace extérieur du boîtier d'emballage, est plus petite qu'une surface en section transversale d'un côté d'entrée de l'élément d'aération, qui est relié à l'espace intérieur, dans lequel
l'élément d'aération est agencé pour comprendre une première zone reliée au côté d'entrée et une seconde zone reliée au côté de sortie,
une surface moyenne en coupe transversale de la deuxième zone a une valeur inférieure à une surface moyenne en coupe transversale de la première zone, et
une surface de section transversale du côté de la sortie est conçue pour être de 0,2 à 0,8 fois une surface de section transversale du côté de l'entrée.

2. Bloc de batterie selon la revendication 1,
la première zone présentant une surface de section transversale constante sur toute son étendue, et
dans lequel une surface en coupe transversale de la seconde région est réduite dans une direction allant de la première région vers le côté de sortie.

3. Bloc de batterie selon la revendication 2, dans lequel la première zone et la deuxième zone ont une forme circulaire en section transversale.

4. Bloc de batterie selon la revendication 2,
la première partie ayant une forme cylindrique creuse, et
ladite seconde partie ayant une forme creuse et tronconique.

5. Bloc de batterie selon la revendication 2, dans lequel une longueur de la deuxième zone est conçue pour être de 0,2 à 0,8 fois une distance entre le côté entrée et le côté sortie.

6. Bloc de batterie selon la revendication 1, dans lequel une surface de section transversale du côté de la sortie est conçue pour être 0,4 à 0,7 fois une surface de section transversale du côté de l'entrée.

7. Bloc de batterie selon la revendication 1,
dans lequel la première région a une forme dans laquelle sa surface en coupe transversale diminue selon un premier angle d'inclinaison dans une direction allant du côté entrée vers le côté sortie, et
dans lequel la seconde région a une forme dans laquelle sa surface en coupe transversale diminue selon un second angle d'inclinaison, qui est supérieur au premier angle d'inclinaison, dans la direction allant du côté entrée vers le côté sortie.

8. Bloc de batterie selon la revendication 1, dans lequel le côté d'entrée de l'élément de ventilation est situé sur la même surface qu'une surface intérieure d'une paroi extérieure du boîtier de pack.

9. Bloc de batterie selon la revendication 1, dans lequel l'élément d'aération est formé sous la forme d'un trou dans une paroi extérieure du boîtier de pack.

10. Bloc de batterie selon la revendication 1, dans lequel l'élément de ventilation a une forme dans laquelle au moins une partie de l'élément de ventilation fait saillie vers un côté extérieur d'une paroi extérieure du boîtier de pack.

11. Bloc de batterie selon la revendication 10, dans lequel au moins une partie de l'élément de ventilation comprend un élément de guidage de la ventilation qui est fixé à la paroi extérieure du boîtier de pack.

12. Bloc de batterie selon la revendication 1, dans lequel au moins un ou plusieurs éléments de ventilation supplémentaires identiques à l'élément de ventilation sont prévus, et dans lequel la pluralité d'éléments de ventilation sont espacés les uns des autres sur une paroi extérieure sur un côté du boîtier de pack.

13. Bloc de batterie selon la revendication 1, dans lequel l'élément d'aération maintient un état ouvert sans être fermé, de sorte que l'air circule à travers l'élément d'aération.

14. Bloc de batterie, comprenant :
un boîtier d'emballage comprenant un élément de séparation définissant une pluralité d'espaces intérieurs adaptés pour recevoir au moins un module de batterie ; et
au moins un élément d'aération pour évacuer le gaz généré à l'intérieur vers l'extérieur du boîtier de conditionnement,
dans lequel l'élément d'aération comprend une ouverture d'entrée ayant une première surface de section transversale et une ouverture de sortie ayant une deuxième surface de section transversale qui est inférieure à la première surface de section transversale, dans lequel
l'élément d'aération est agencé pour comprendre une première zone reliée au côté d'entrée et une seconde zone reliée au côté de sortie,
une surface moyenne en coupe transversale de la deuxième zone a une valeur inférieure à une surface moyenne en coupe transversale de la première zone, et
une surface de section transversale du côté de la sortie est conçue pour être de 0,2 à 0,8 fois une surface de section transversale du côté de l'entrée.
